# EUROPEAN PATENT APPLICATION

(11) **EP 3 795 880 A1**
(43) Date of publication of application: **24.03.2021**
(21) Application number: 19460048.2
(22) Date of filing: 17.09.2019
(51) Int. Cl.: F16L 55/18, F16L 55/26, F16L 55/40, F21K 9/00

(54) **A DEVICE FOR CURING PIPELINE INNER RESIN LININGS**

(71) Applicant: Sewertronics Sp. z o.o., 37-114 Bialobrzegi (PL)
(72) Inventor: KUZNIAR, Slawomir, 37-100 Tancut (PL)
(74) Representative: Warzybok, Tadeusz

(57) **Abstract**

The subject of the invention is a device for curing inner resin linings of a pipeline lined with the use of lining sleeves impregnated with a resin which is characterised in that in its housing (1) made of a silicone rubber transparent for the light emitted by LEDs mounted in the housing or for the UV light, a subassembly (2) is placed equipped with LED modules the profiled metal bodies of which constitute solids having the form of truncated pyramids with polygonal bases with their polygonal or circular bases provided with protrusions in the form of fins inscribed in perimeters of the bases, whereas fittings equipped with LEDs are joined detachably to walls of the bodies.

## Description

The subject of the present invention is a device for curing pipeline inner tubular resin linings with the use of lining tubes impregnated with a resin.

Worn-out and leaking pipelines, such as sanitary sewerage systems, deteriorated because of, among other things, insufficient maintenance, are subjected to renovation by means of lining with resin-impregnated tubes dragged into the pipeline and bonding them with inner surface of the pipeline in order to eliminate leakage and soaking of the carried liquids through the pipeline walls and thus stopping their destructive impact on natural environment.

Pipeline renovation technologies based on lining the pipes with a resin-impregnated tube have been described in numerous patents and patent applications, with the so-called inversion technique being disclosed in some of them. Other patent descriptions, e.g. WO 2004/104469, reveal a method consisting in dragging a resin lining into a pipeline, whereas hardening or curing the resin compound, especially thermosetting one, consists mainly in using hot water or hot steam.

From patent description WO 93/15131 known is a pipeline renovation method in which ultrasonic radiation is used to cure the resin lining. To this end, a movable device is used equipped with ultrasonic transducers, introduced into and translated along the pipeline as well as the catalytic component of the resin contained in micro-capsules which are torn apart by the ultrasonic field energy. The resin-soaked tube constituting the lining is placed in pipeline and then cured by means of ultrasonic energy in order to release the curing catalyst.

A newer method of curing tubular resin lining on inner surface of pipeline consists in the lining being irradiated with UV waves, with an vacuum electron tube being used for this purpose as a source of radiation introduced into the pipeline and said radiation resulting in the resin lining being cured by means of the device emitting such ultraviolet radiation.

However, it turned out that despite a number of merits characterising this method of curing resin pipeline linings, including minimisation of energy consumption compared to conventional method of curing resin linings by means of hot water of steam, the device has a serious flaw consisting in that UV radiation emitted from the device is very harmful to health and threatens lives of workers operating the devices.

From patent description WO 2005/103121 known is a photosetting composition of resins which is cured by means of irradiation with visible light, especially the light with wavelength of about 450 nm, i.e. blue light, whereas the relevant patent application refers to different techniques encompassing the prior art available at that time, describing also the favourable features of such curing.

Further, from patent description of European patent No. EP 2129956 B1 known are two design variants of the device for curing pipeline inner linings based on the use of light emitting diodes (LEDs) which, unlike UV-radiation emitting devices based on application of vacuum tubes, are characterised with high stability, generally constant efficiency of energy or power emission level throughout the LED service life, whereas to increase effectiveness of these devices, they are equipped with an integrated fluid-based cooling systems. The device according to the first version of embodiment of this invention has a central eight-section (octahedral) segment of the device's housing provided on both ends with annular spacers, fixed by means of fasteners, whereas the spacers with outer diameter adjusted to the inner diameter of pipeline lining have flange-shaped protrusions offset outside with holes for said fasteners, and within the vicinity of at least one of the spacers mounted is a fan forcing the flow of compressed air via inner axial hole in said segment of the device's housing. The fan cools LEDs contributing to dissipation of heat onto inner finned radiators situated opposite the LEDs. Further, the rear sleeve-shaped spacer situated on the fan side is equipped with a Cardan joint allowing to couple the above-described single devices with a second analogous device. Moreover, each of the eight sections of the housing segment is equipped with a printed circuit board (PCB) with twelve diodes mounted on it, so that the housing segment has a total of 96 diodes, of which 95 are light-emitting diodes (LEDs) and the one is a temperature or infrared detecting diode used to monitor temperature of inner surface of the cured pipeline lining, and further, PCB holds a temperature sensor to prevent increase of LED temperature above an admissible maximum level, said sensor being connected in series with the light-emitting diodes and used to deactivate them in case of detecting temperature values exceeding those pre-assumed to be the maximum admissible ones. Furthermore, the front portion of each profiled section of the device housing segment has a cavity in which a transparent shield is placed to provide mechanical protection for LEDs placed under the cover, whereas opposite this protective shield, the above-mentioned PCB is placed with its front face oriented opposite the LEDs, coupled by means of thermal conductivity with finned metallic element (radiator) radiating the heat out and channelling the heat generated by the light emitting inside the housing segment provided with a straight-through duct in which compressed air is supplied under pressure through said housing segment to cool the finned metallic elements and thus cooling the electromagnetic radiation emitting LEDs. Each of the eight profiled sections of the device housing segment is positioned in a way allowing to connect it to the neighbouring analogous profiled housing section and thus obtain the octahedral segment of the housing, whereas side surfaces of each section, which are to be joined to side surfaces of neighbouring sections of the housing, are provided with semicircular hollows, allowing to interconnect the eight profiled sections of the housing with each other by means of straight-through pins inserted in them.

In another version of embodiment of the device according to the above-quoted invention, the device comprises two housing segment, both having the shape of a circular cylinder, assembled out of six arched sections of each segments of the housing, and each of the sections is equipped with twelve LEDs and six front elements in the form of a ring segment, connected with each other by means of spacers and securing pins so that the two housing segments connected with each other have a total of twelve sections containing a total one hundred and forty four LEDs.

From the patent description of invention No. EP 16400093 known is also a device for curing inner linings of pipelines with the use of a resin compound cured by means of electromagnetic radiation equipped with a central polyhedral body provided with LEDs generating the radiation by emitting waves with length 200-500 nm to cause curing of the resin compound, with the LEDs being shielded with an element made of transparent glass or quartz glass. The body of the device is equipped with finned metal elements functioning as radiators carrying away the heat generated by the LEDs, and to the inlet of an axial straight-through hole provided in the front shield element of the body, supplied is compressed air for cooling the diodes, or the input of the device is equipped with a fan cooling the LEDs via the radiators, and moreover, the device is equipped with a LEDs temperature monitoring sensor, a monitoring camera, a hose supplying compressed air for cooling the LEDs, leads supplying electric power to LEDs and temperature sensors, and vehicle assemblies; moreover, the front portion of the device is equipped with a hook for a rope dragging the device along the pipeline. The device is characterised mainly in that its diversified bodies constitute monolithic cylindrical solids provided, along the whole length of their outside surfaces with different radii, with identical flat facets or chords distributed symmetrically on the surfaces, and with said facets or chords detachably joined are plastic plates equipped with LEDs emitting electromagnetic radiation with definite range of wavelengths, whereas the plastic strip-shaped of the body are joined detachably with the chords situated on and along these chords in two rows, and in each of the plates there are LEDs mounted, also in two rows, preferably five LEDs per row.

Between each two chords situated next to each other, provided are slit grooves, radially oriented and terminated with circular or semicircular grooves with diversified heights ranging from 2/3 to 3/4 of lengths of radii of the bodies, and side walls of the identical figures separated this way from each other and with their shapes close to isosceles trapeziums are provided with profiled recesses functioning as radiators which are supplied with compressed air for cooling LEDs via profiled recesses in brackets, whereas the air outlet is provided in analogous brackets which are joined detachably with rear and front faces of body of the device, which in turn is joined, also detachably, with front covers and rear covers, respectively, or with the rear lid. Further, inside its profiled front covers of the device mounted are monitoring cameras shielded with glass plates, and above them, in bean-shaped holes, mounted are LEDs illuminating the cameras, and still above them, on the perimeter of faces of the covers, provided are outlet holes for air cooling the LEDs. Moreover, both of the brackets of the device have the shape of circular plates provided with profiled holes with shapes of the holes close to isosceles trapeziums and situated opposite radiators of the device, or the upper inner ends of the brackets are provided with annular recesses in which a monolithic glass sleeve-shaped shield for LEDs is permanently mounted.

In a variant of embodiment of the device, the radiators have Christmas-tree-shaped profiles formed by obliquely oriented grooves and ribs separating them, with lengths diminishing towards horizontal axes of their bodies. It is favourable when radiators of the body of the device are T-shaped figures with lateral two-sided slit-shaped recesses forming strip-shaped rectangular longitudinal two-sided protrusions from upper oblique members of T-shaped profiles and oriented in parallel to lower longer elements of the profiles, whereas the strip-shaped side protrusions have lengths decreasing towards these upper elements of the T-shaped profiles. It is further favourable when the rear face of the body is joined detachably with a rear lid in the sleeve-shaped portion of which mounted is a fan blades of which blow air into radiators of the body, said air being supplied from outside via air inlet holes provided in the surface of the front conical profile of the lid. In another variant of its embodiment, the device has a monolithic metal body in the form of a cylinder provided on its outer surface with flat facets-chords to which plates are attached detachably, and between each two neighbouring chords and along the body, provided are grooves oriented along its horizontal axis, while side walls of the trapezium profiles formed this way are provided with profiled grooves separated from each other with ribs, functioning as Christmas-tree-shaped radiators, whereas to both flat surfaces of the device body attached are brackets and profiled covers, while the outer diameter of the body with LEDs is about two times larger from outer diameters of the covers.

Favourably, a nozzle for compressed air is formed between the front cover of the device and the front bracket which directs the air after cooling the LEDs onto the cured lining sleeve of the pipeline illuminated by the LEDs. It is favourable also when LEDs are connected functionally with each other so that it is possible to switch them on and off alternately depending on the required intensity of electromagnetic radiation emitted into the cured surface.

Equipping the body of the device with such a number of plates carrying LEDs with the total power of preferably 50 W per board allows, if necessary, to switch the diodes on and off in a sequence or switch all the diodes on with their definite rated powers, e.g. to switch on a half of LEDs at 33% of power and another half at 67% power with rated power of 50 W, where the diodes alternately exchange the power emitted by them and the pipeline is irradiated along the whole of its circumference. The body of the device can be equipped with LEDs with total rated power of 300 W which is achieved by activating them e.g. for 1 second at 200 W and for subsequent 1 second at 400 W, or at 500 W for 1 second and at 100 W for the next 1 second, which allows to obtain a rated power equalling the arithmetic average, and at the same time, to obtain higher power of electromagnetic radiation directed onto pipeline surface.

From patent description of invention No. EP 17460015 known is also a device for curing pipeline inner lining with the use of a lining tube containing a resin-based compound cured by means of electromagnetic radiation consists in that it comprises a metal three-piece monolithic body, both of the two extreme substantially cylindrical portions of which have a diameter larger than the diameter of its middle substantially cylindrical portion. Outer surfaces of the two extreme portions have the form of a dozen or so identical symmetrically distributed flat facets or chords extending along the whole of their lengths, and between each two neighbouring chords there are slit grooves oriented radially and ended, along the whole of their lengths, with circular ducts distributed evenly around a monolithic core of the body, carrying power leads supplying electric current to LEDs (24) and to the front camera unit. On both oblique walls of the profiled figures thus formed provided are rectangular grooves oriented parallel to upper flat facets and separated from each other by ribs, with a broader trapezium profile formed between said oblique walls, while below it, another rectangular grooves are provided separated from each other by ribs widths of which decrease towards the circular ducts, whereas the middle portion of the body on its cylindrical outer surface is also provided over the whole of its length with identical symmetrically distributed flat facets-chords with lengths close to the lengths of upper sides of trapezoidal profiles of the two extreme portions of the body. Further, between each two the neighbouring chords, there are also slit grooves oriented radially and also terminated with horizontally oriented circular grooves provided along the whole of length of the middle portion of the body, whereas on both side oblique walls of the thus formed profiled features on bases of these flat facets provided is a trapezoidal profile, and below it, between the two oblique walls of the profiled features, provided are rectangular grooves separated from each other with ribs, so that the profiled features formed this way constitute radiators for the middle portion of the body with shapes identical to those of lower portions of radiators for both of the two extreme portions of the body, the radiators being situated in line with each other and form a common stretch of slit grooves, ribs, and horizontally oriented circular ducts. Moreover, outer faces of both of the extreme portions of the body are joined detachably with profiled shields each of which, on its outer surface, is provided with three recesses in the form of isosceles trapeziums with open upper sides symmetrically distributed on circumferences of circles forming thus three segments on each of said body portions, with a sensor controlling temperature of the cured lining tube being fixed to bottom of one of the recesses and straight-through holes provided in the shields on their symmetry axes extended with threaded sleeve connectors protruding outside. The radial slit grooves of the device body have favourably the total height equalling 0.6-0.8 of the radius of extreme portions of the body, whereas the radial slit grooves ended with circular ducts have favourably the total height equalling 0.5-0.7 of the radius of the middle portion of the body. Further, plastic strip-shaped plates with LEDs installed in them have favourably a length less than the length of the middle portion of the device body.

Depending on length and diameter of the cured pipeline lining, the device according to the invention constitutes an assembly of several or a dozen or so individual devices sleeve connectors of which, provided with profiled shields, are connected with each other detachably by means of a connecting sleeve members, and moreover, the front sleeve connector of the leading device in the assembly is provided with a blanking element onto which a front camera unit is screwed comprising a cylindrical-sleeve body the face of which connected is with a profiled sleeve element having a lid provided with an axial hole in which the face of the front monitoring camera is mounted surrounded with a counterweight and LEDs mounted around the camera, whereas the connection sleeve connected with the rear camera unit, said unit being equipped with power supply connector and LEDs, is screwed onto the threaded sleeve connector of the trailing device of the assembly.

An the other hand, a device for curing pipeline inner resin linings known from a publication available at the web address https://www.fluvius-shop.com/uv-sanierung/radsatz, comprises a cylindrical housing made of a transparent plastic, a subassembly comprising seven diode (LED) modules placed in the housing and two face covers fixed on a common shaft, with one of the covers being equipped with a video camera, and the second provided with components supplying electric current to the LEDs, and components supplying compressed air, whereas the modules are fixed on the shaft at the same distance from each other. Moreover, each of the modules has a metal body with six rectangular walls distributed symmetrically along circumference of a circle, said body being equipped with LEDs, whereas round disk-shaped elements with rounded faces protruding above edges of each pair of neighbouring walls are fixed to both faces of these bodies, so that the round faces of these elements adhere to the cylindrical elastic housing of the device.

However, it has been found that the structure of the above-described device, when placed inside a pipeline with damaged inner resin lining, was unable to reach the expected objective, as the solution failed to guarantee uniform irradiation of the whole of inner surface of pipelines with small diameters where the radiation generated by individual LEDs did not overlap enough to cover the whole surface of the cured resin lining leaving thus some portions of the renovated resin lining of the pipeline uncured. This is the essential flaw of the solution as a result of which the radiation generated by LEDs of each of the diode modules is distributed within patterns having the form of isosceles triangles longer sides of which, adjacent to the renovated resin lining, come into contact with each other at half distance between each two diode modules of the device. This results in heterogeneity of irradiation of the renovated lining and thus prolongs the overall lining renovation time.

The objective of the present invention is to provide a simple and compact structure of a device for curing resin-based pipeline linings which would allow to renovate resin linings in both single-pipe rectilinear and angled pipelines, such as elbows and two-pipe structures called access connections, connected with each other at a desired angle, in most cases at 90° or 45° relative to their axes of symmetry, with the option to move the device along the main pipeline with the use of any known method. Another fundamental objective of the present invention is to develop such a structure of the device in question which would eliminate the flaws of the devices of that type referred to above in description of the prior art.

The device for curing single-element pipeline inner resin linings according to the present invention is characterised in that in its housings, made of a silicone rubber transparent to the light emitted by LEDs mounted inside the hosing or to the UV light, a subassembly is situated equipped with LED modules, profiled metal bodies of which constitute solids in the form of truncated pyramids or truncated cones with their bases provided with protrusions in the form of fins inscribed in perimeters of the bases, whereas fittings equipped with LEDs are joined detachably to walls of the bodies; or in said housing, a subassembly is situated LED modules of which have also metal bodies but in the form of two truncated pyramids or two truncated cones with their bases turned towards each other, whereas walls of said bodies are connected detachably with fittings equipped with LEDs.

It is favourable when the metal bodies of the LED modules are provided with coaxially drilled mounting holes on their side face walls, and above said holes, they have single straight-through holes for electric conductors connected to an electric socket provided in the front cover and supplying electric current to diodes of said LED modules.

It is further favourable when in the threaded mounting holes of the LED modules, rubber connecting pieces are fixed which interconnect the modules.

It is also favourable when one of subassemblies of LED modules comprises two sets of such modules, each set comprising the same number of the modules, and finned protrusions functioning as radiators for each of these sets are oriented towards their respective covers of the body.

It is further favourable when the metal bodies of LED modules are made of aluminium, whereas the bases of their solids are separated from each other with an annular prominence provided with a groove to hold an O-ring.

On the other hand, the device for curing two-element pipeline inner resin linings according to the present invention is characterised in that it comprises a first housing and a second housing connected with and oriented at appropriate angle relative to the first housing, both housings having different diameters and lengths but made of a silicone rubber transparent for the light emitted by LEDs mounted in them or transparent for UV light, the housings being equipped with a horizontal subassembly and a vertical subassembly, respectively, the two subassemblies connected with each other articulately and both of them containing LED modules, profiled metal bodies of which constitute solids in the form of truncated regular pyramids or truncated cones with their polygonal or circular bases provided with protrusions in the form of fins inscribed in perimeters of the bases, whereas fittings equipped with LEDs are joined detachably with side walls of the bodies; or in the two cylindrical housings of the device, a horizontal subassembly and a vertical subassembly are placed and connected articulately with each other, LED modules of which have also metal bodies but in the form of two truncated pyramids or two truncated cones with their bases turned towards each other, whereas the walls of the bodies are joined, also detachably, with fittings equipped with LEDs.

It is favourable when walls of the LED modules in vertical subassemblies of the device are equipped with two LEDs each.

It is also favourable when the metal bodies of LED modules are provided, on their side face walls, with coaxially oriented assembly holes, and above such holes, the bodies are provided with single straight-through holes for electric conductors connected to an electric socket provided in the front cover and supplying electric current to LEDs of all LED modules, while in the mounting holes of the LED modules, rubber connecting pieces are fixed which interconnect the modules.

It is further favourable when the horizontal subassembly of LED modules consists of two sets of modules, each comprising the same number of LEDs, and finned features functioning as radiators for each of the sets are oriented towards respective round cover of the body, whereas the finned offsets of LED modules of the vertical subassembly are oriented towards the rounded end of the subassembly housing.

It is further favourable when the metal bodies of LED modules are made of aluminium, whereas the bases of their solids are separated from each other with an annular prominence provided with a groove to hold an O-ring.

It is also favourable when the vertical subassembly is oriented at the right angle or an acute angle or an obtuse angle relative to the horizontal subassembly.

The device for curing inner resin linings in both straight single-tube pipelines and pipelines composed of two pipes connected at the right angle or any other angle, such as in case of a main pipeline being equipped with an inspection chamber, according to the present invention has a number of merits, namely:
- it allows to carry out the process of curing inner linings in both single-tube rectilinear pipelines and in two-tube pipelines comprising two rectilinear pipes connected to each other at a desired angle. Elastic connection and specifically designed shape of all LED modules allows, unlike in other known solutions with rigid connections, to irradiate the whole pipeline interior regardless of its diameter and path;
- mounting the LEDs emitting waves with wavelengths in the range 350-500 nm adapted to commonly used photo-setting resin compounds on six obliquely oriented trapezoidal walls of LED modules making up a device subassembly situated in a cylindrical transparent housing made of a silicone resin results in that the electromagnetic UV radiation generated by LEDs or high-vacuum electron tubes and directed onto the resin lining of the renovated pipeline, covers the whole of the surface, because at the junction points over O-rings of the diode modules, the rays overlap, and between the modules, the rays merge below the inner cylindrical surface of the housing securing thus the required thickness of the resin lining;
- the continuous layer of electromagnetic UV radiation with appropriate wavelength of about 400 nm irradiates the whole of the cured resin lining of the pipeline resulting in continuous homogenous curing of the lining, reducing thus the time required to complete the curing process compared to the curing methods known in the prior art; and moreover,
- makes it possible to bend the vertical portion of the device until it comes into contact with the rubber housing of the main portion of the device facilitating thus both its transportation in a packaging before placing it in a pipeline to be renovated and its displacing in the pipeline up to the desired position when the renovation is to be carried out; and further,
- by equipping the subassembly of LED modules placed in the main renovated pipeline with a T-connection, it is possible to connect it articulately with another similar LED subassembly at any angle, e.g. 90°, which allows to place it in another renovated vertical portion of the pipeline system such as an inspection chamber; and moreover,
- simplicity of the structure of diode subassemblies composed of modules connected with each other in series by means of the pin-and-seat method allows to reduce to a minimum both the manufacturing cost and the assembling cost of the device according to the invention.

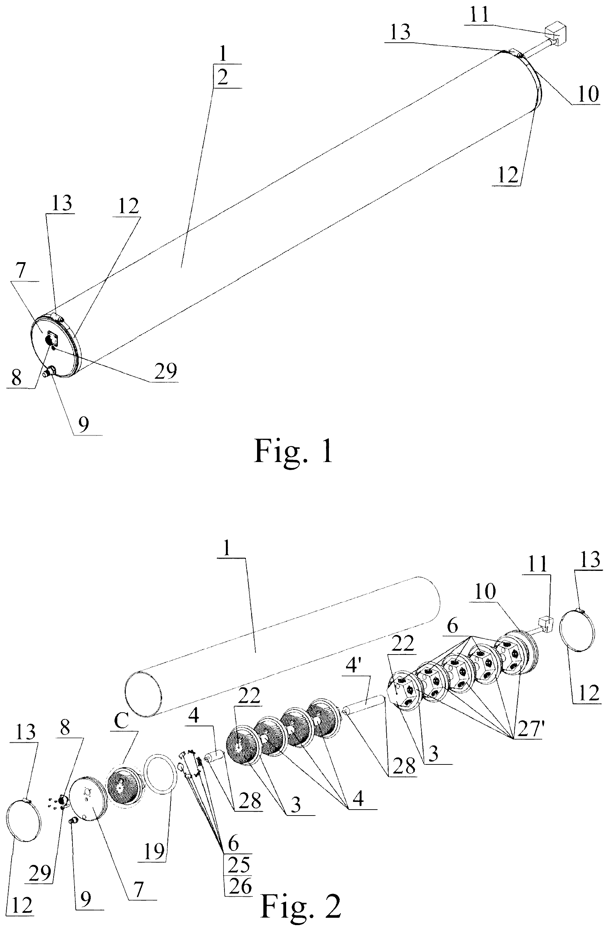

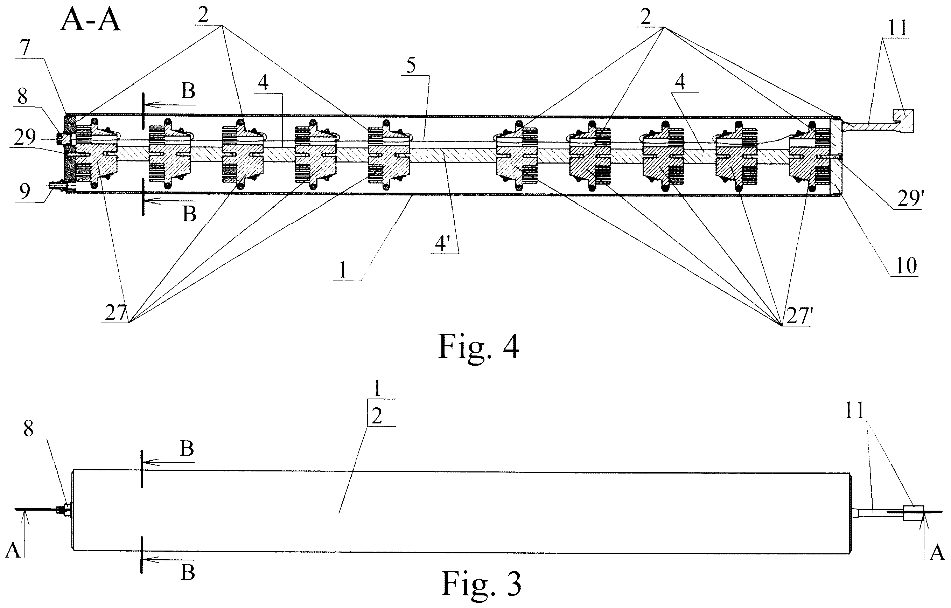

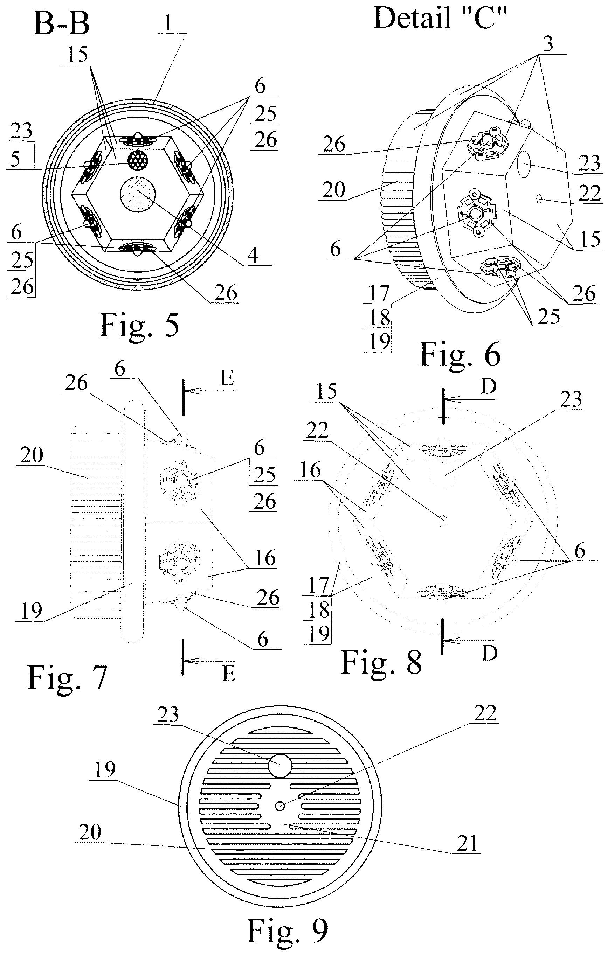

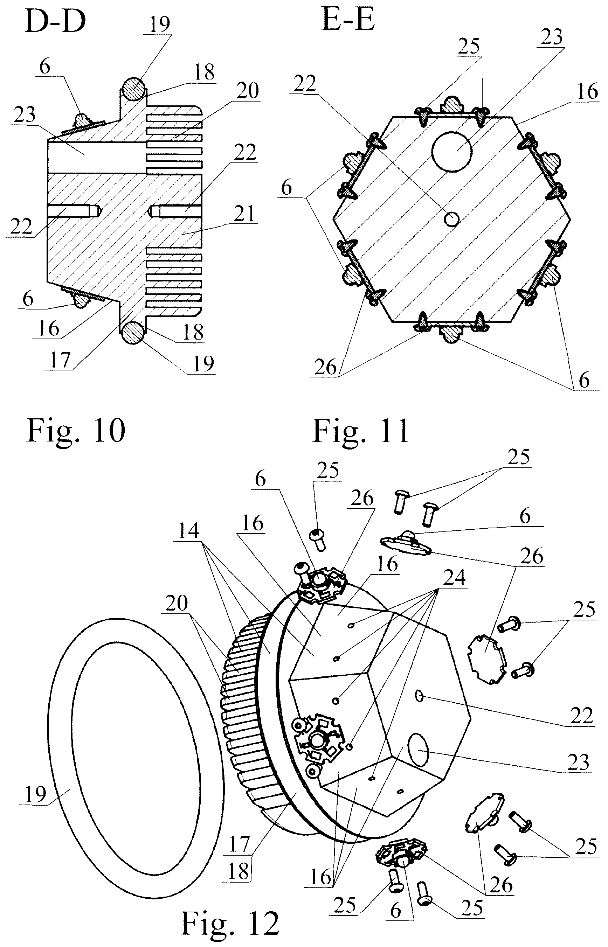

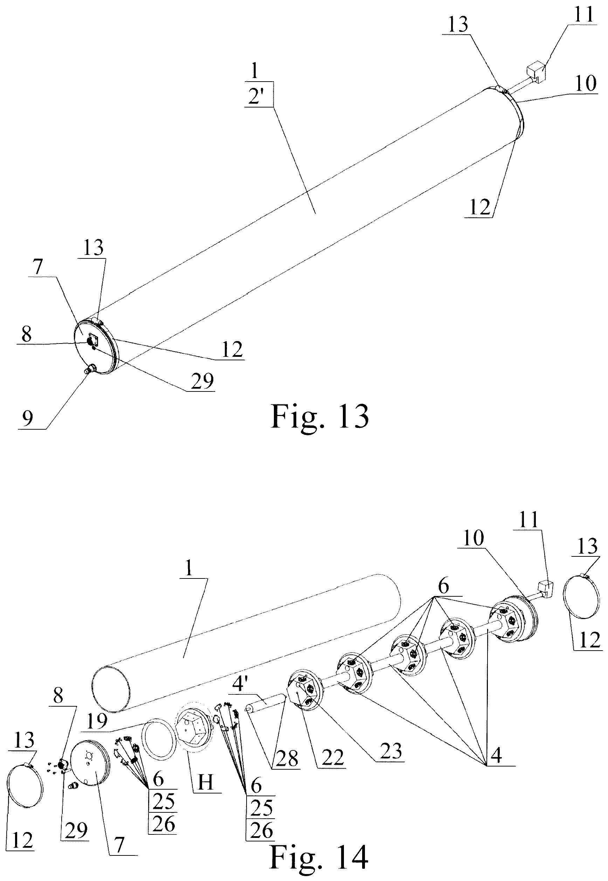

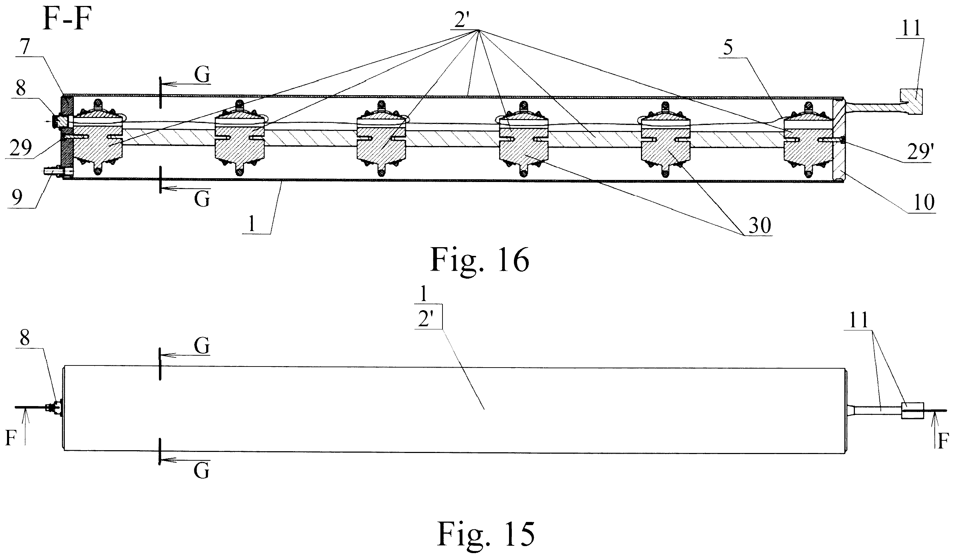

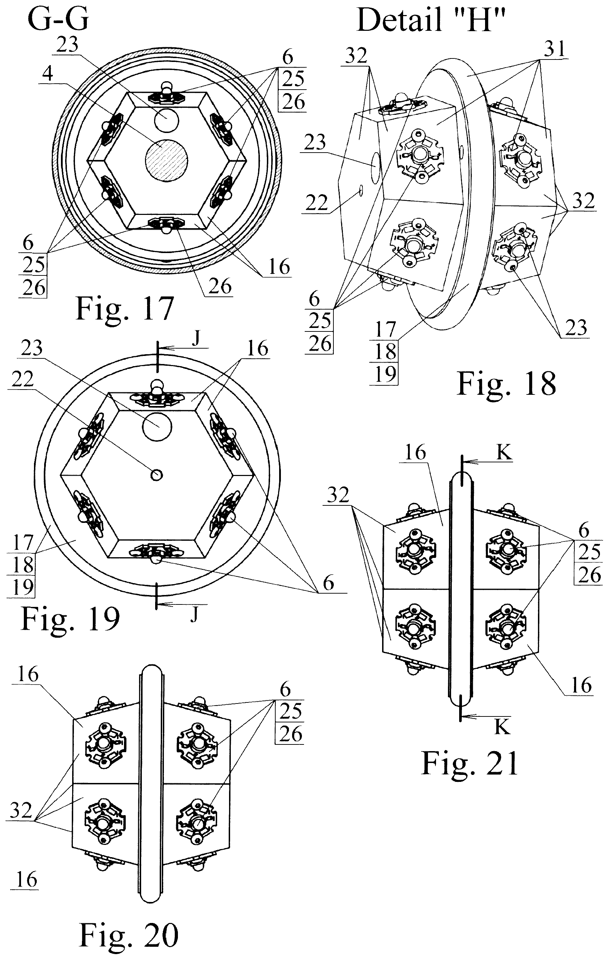

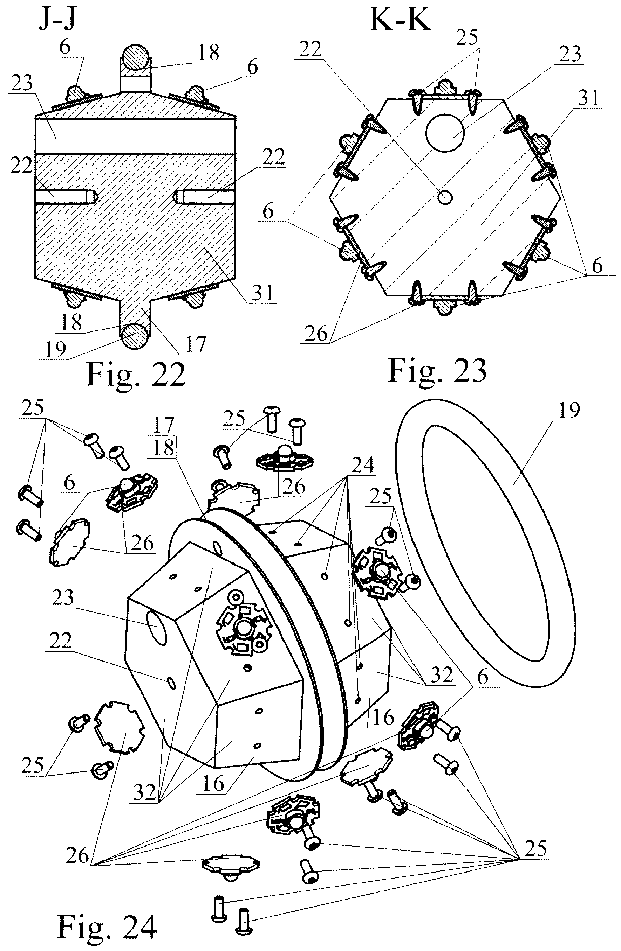

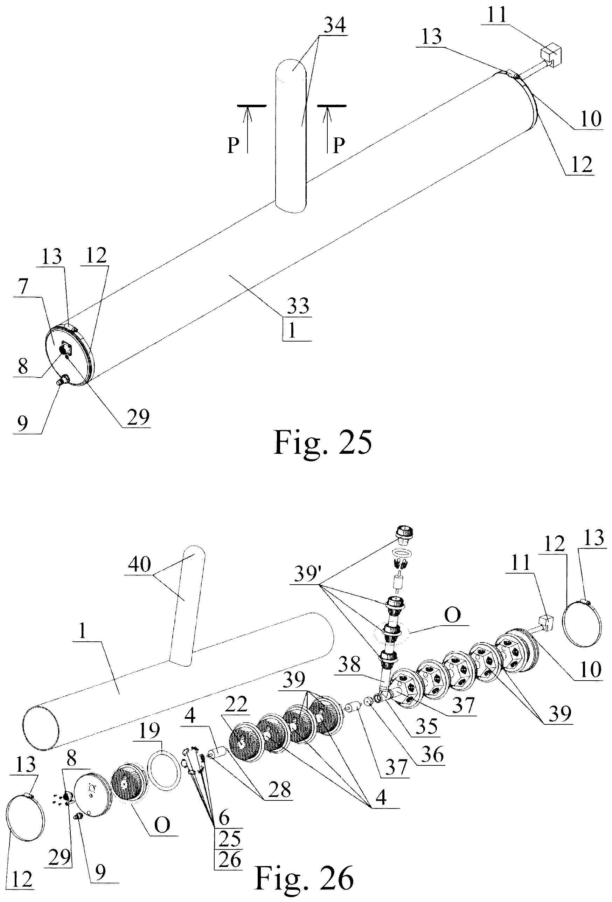

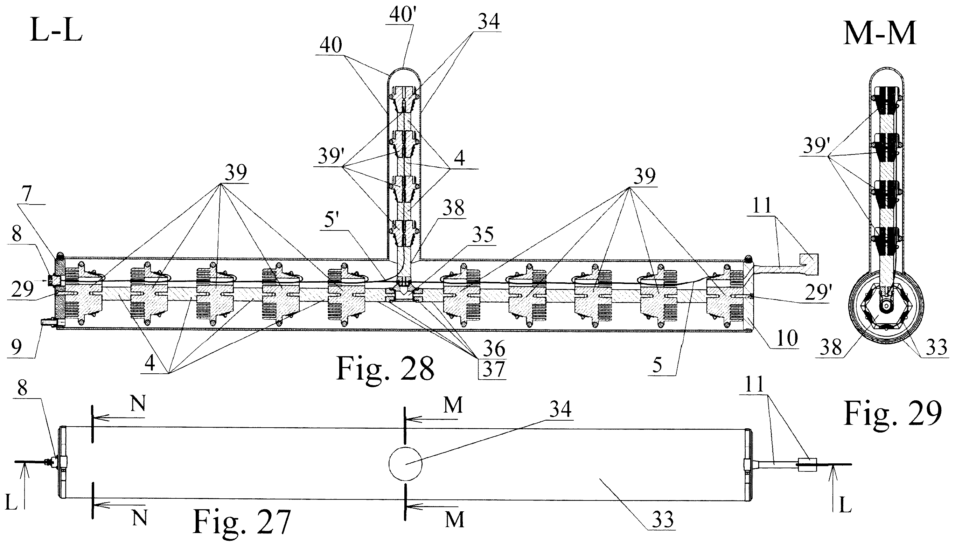

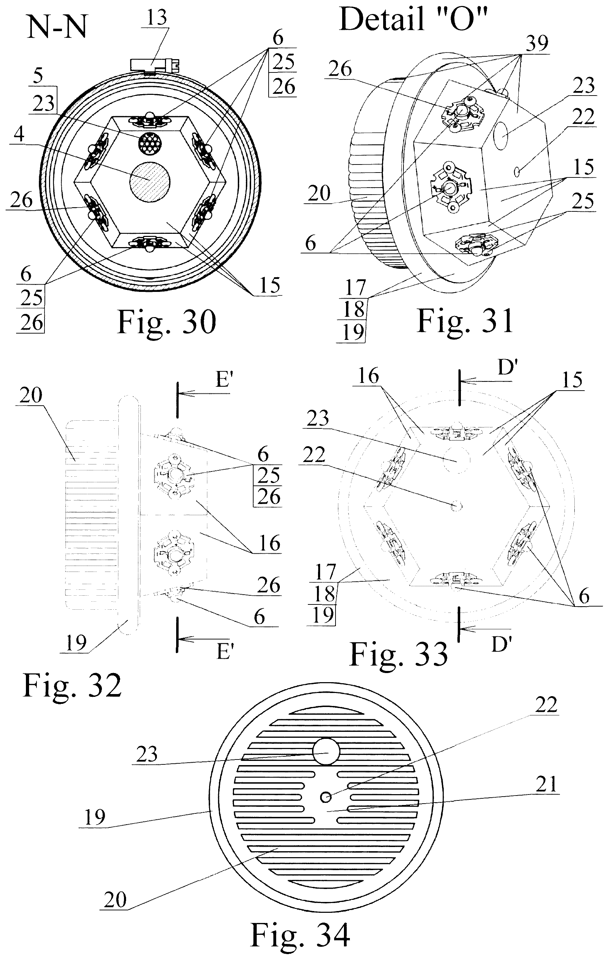

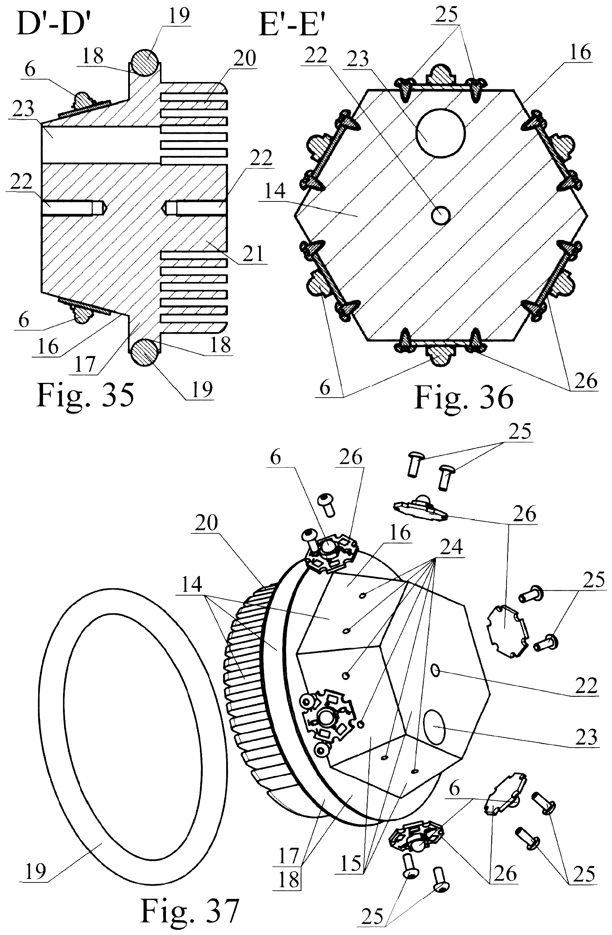

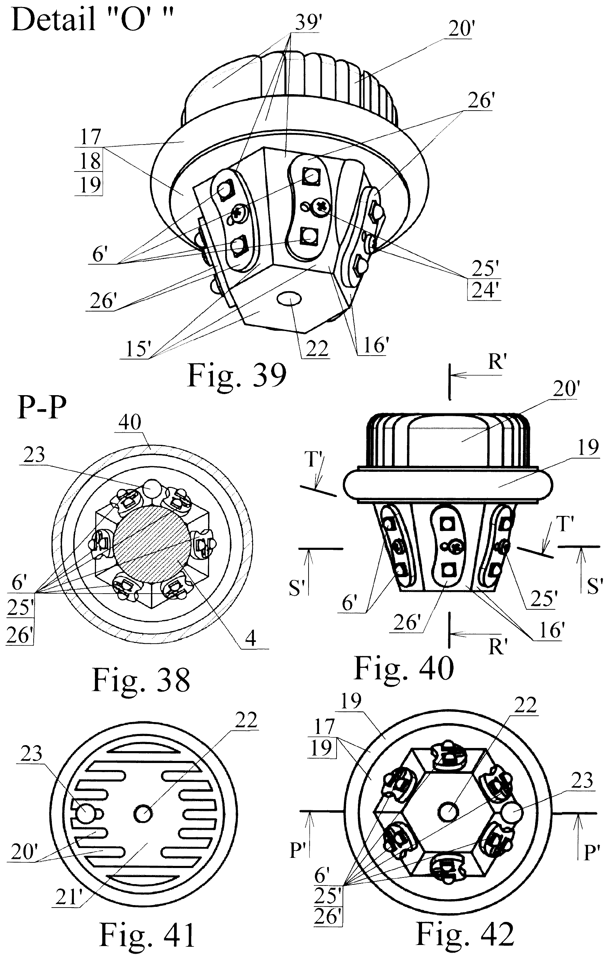

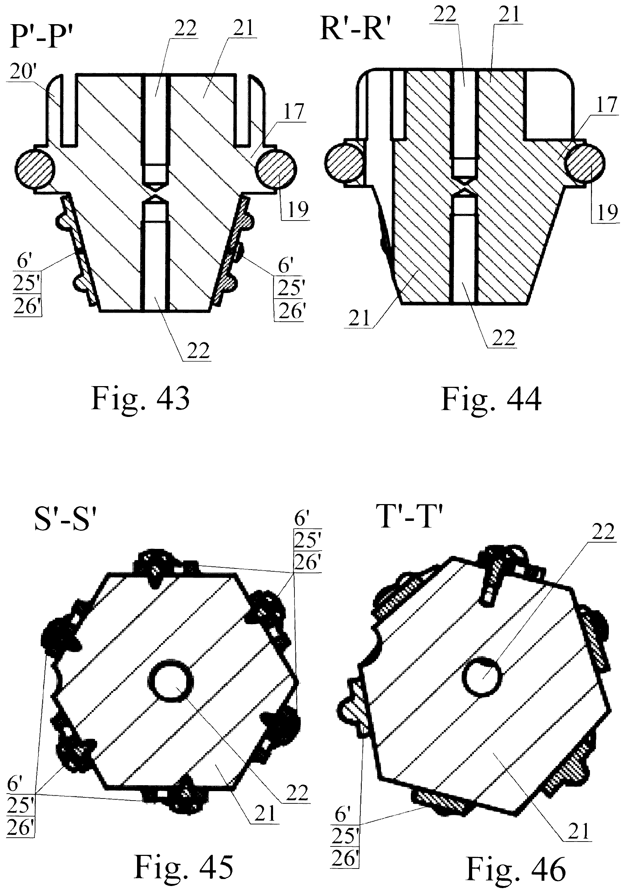

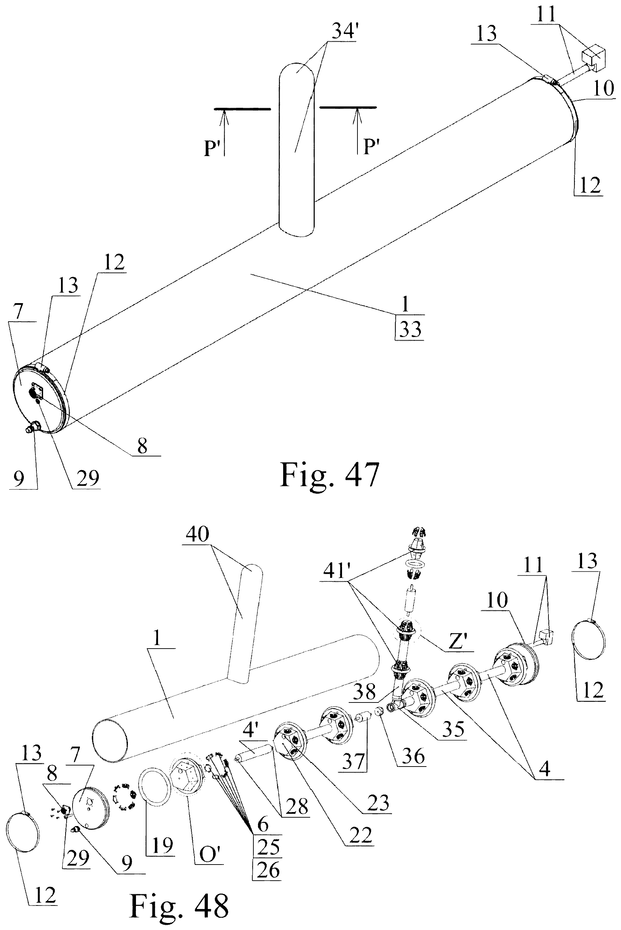

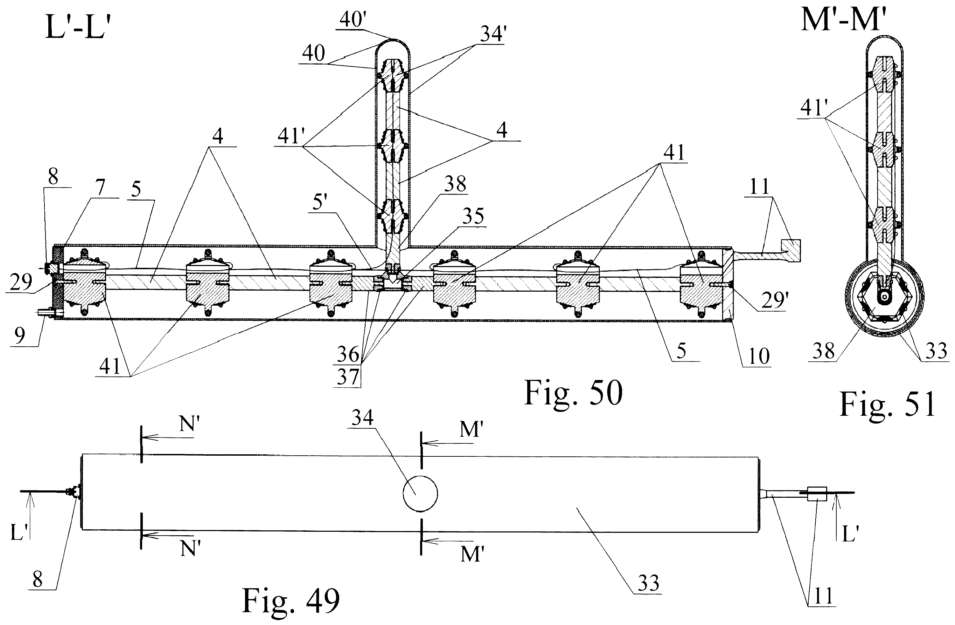

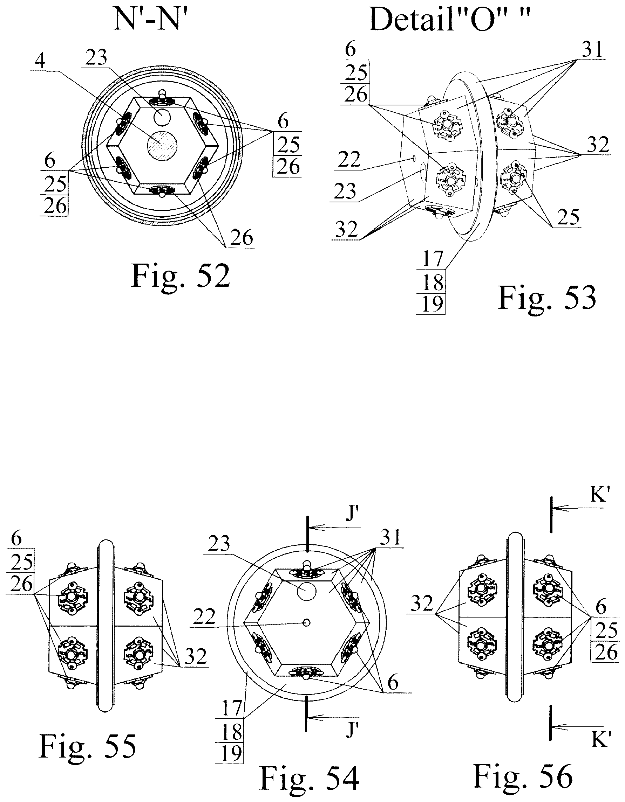

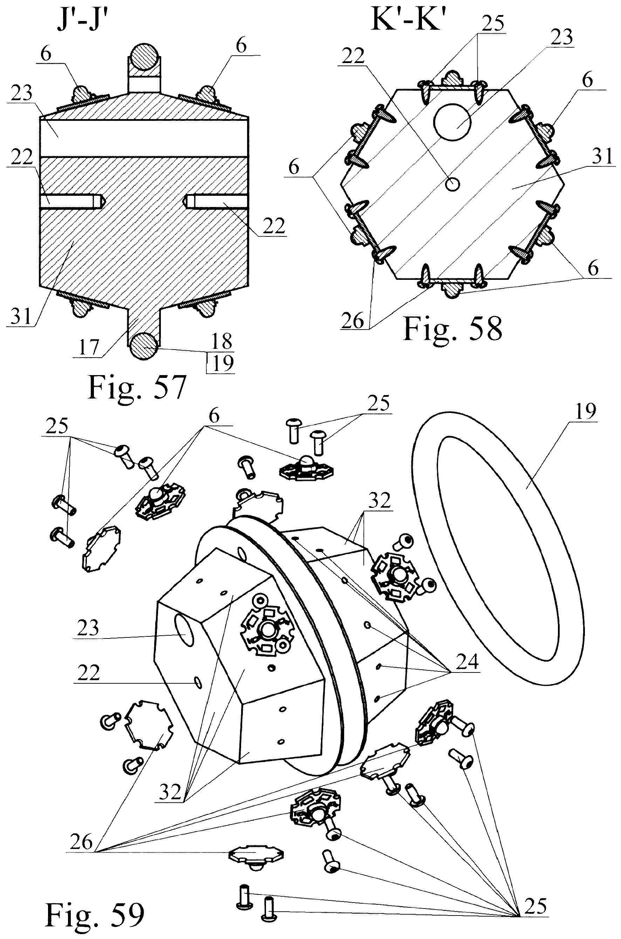

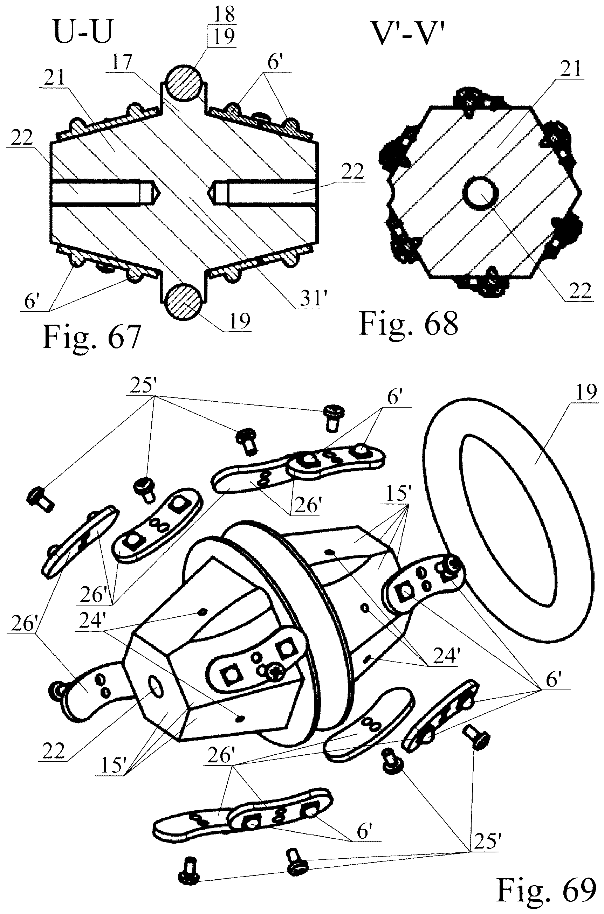

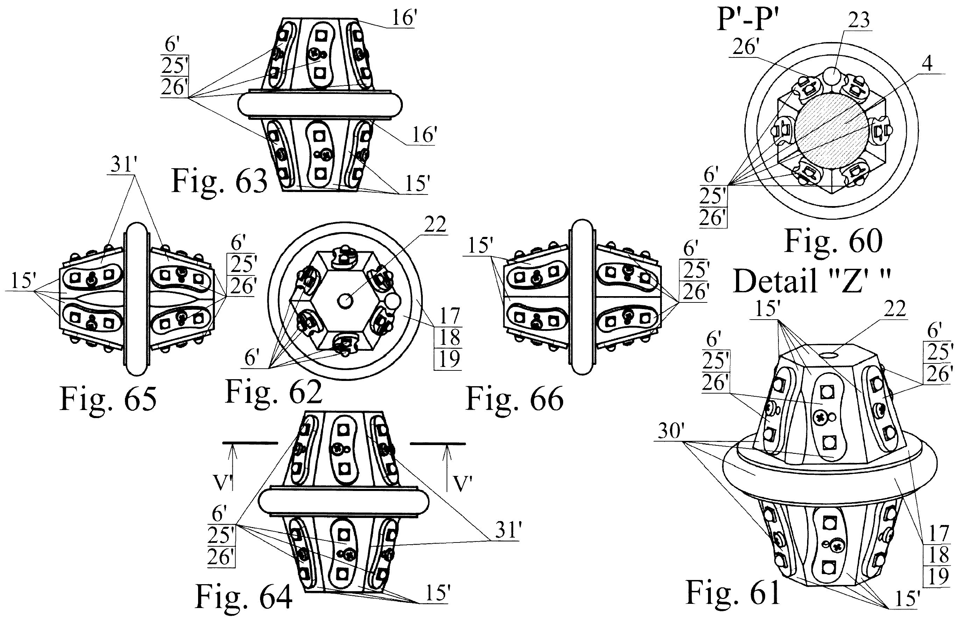

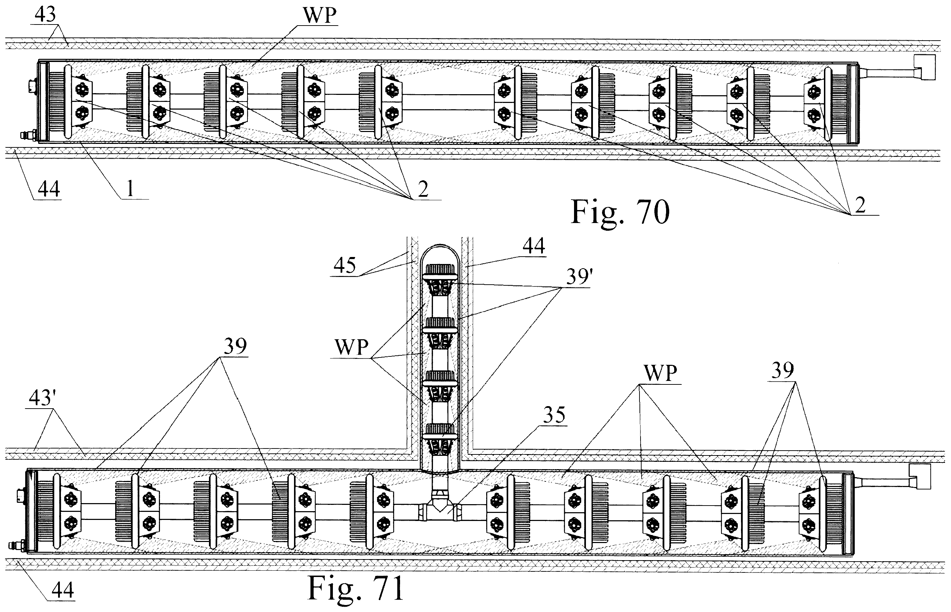

The subject of the invention in four variants of its embodiment is presented in drawings, of which Figs. 1-12 show a first variant of embodiment of the device for curing inner resin linings of rectilinear pipelines, equipped with diode modules with single-sided sets of LEDs, of which Fig. 1 shows the device in the perspective view; Fig. 2 - an exploded perspective view of component elements of the same device; Fig. 3 - the same device in the top view; Fig.4 - the same device in axial section along line A-A; Fig. 5 - the same device in transverse section along line B-B; Fig. 6 - enlarged details "C" depicting one of ten identical sets of LEDs of the device in the perspective view; Fig. 7 - the same diode module in the front view; Figs. 8 and 9 - the same module as seen from both of its two sides; Fig. 10 - the same module in axial section along line D-D; Fig. 11 - the same module in vertical section through the set of LEDs along line E-E; and Fig. 12 - an exploded perspective view of component elements of the same diode module. Figs. 13-24 show a second variant of embodiment of the device for curing inner resin linings of rectilinear pipelines equipped with diode modules with two sided sets of LEDs, of which Fig. 13 shows the device in the perspective view; Fig. 14 - an exploded perspective view of component elements of the same device; Fig. 15 - the same device in the top view; Fig. 16 - the same device in axial section along line F-F; Fig. 17 - the same device in vertical section along line G-G; Fig. 18 - enlarged detail "H" of one of six identical diode (LED) modules of the device in the perspective view; Fig. 19 - the same module in the side view; Figs. 20 and 21 - the same module in front views; Fig. 22 - the same module in axial section along line J-J; Fig. 23 - the same module in transverse section along line K-K; and Fig. 24 - an exploded perspective view of component elements of the same module. Figs. 25-46 show a third variant of embodiment of the device for curing pipeline inner resin linings comprising a horizontal main pipe provided with a vertical inspection chamber pipe, in which the device being equipped with diode modules with single-sided sets of LEDs, of which Fig. 25 shows the device in the perspective view; Fig. 26 - an exploded perspective view of component elements of the same device; Fig. 27 - the same device in the top view; Fig. 28 - the same device in vertical axial section along line L-L; Fig. 29 - the same device in vertical axial section of the horizontal pipeline along line M-M; Fig. 30 - the same device in transverse section along line N-N; Fig. 31 - enlarged detail "O" of one of ten identical diode (LED) modules of the device in the perspective view; Fig. 32 - the same module in the front view; Figs. 33 and 34 - the same module in both of its side views; Fig. 35 - the same module in axial section along line D'-D'; Fig. 36 - the same module in vertical section through a set of LEDs along line E'-E'; Fig. 37 - an exploded perspective view of component elements of the same diode module; Fig. 38 - the same device in an inspection chamber pipe joined to a horizontal pipeline in transverse section along line P-P; Fig. 39 - enlarged detail "O'" of one of four identical diode (LED) modules of the device in the perspective view; Fig. 40 - the same module in the front view; Fig. 41 - the same module in the top view; Fig. 42 - the same module in the bottom view; Fig. 43 - the same module in transverse axial section along line P'-P'; Fig. 44 - the same module in vertical axial section along line R'-R'; Fig. 45 - the same module in horizontal section along line S'-S'; and Fig. 46 - the same module in transverse section along line T'-T'. Figs. 47-69 show a fourth variant of embodiment of the device for curing pipeline inner resin linings comprising a horizontal main pipe combined with a vertical inspection chamber pipe, said device being equipped with diode modules comprising two-sided sets of LEDs, of which Fig. 47 shows the same device in the perspective view; Fig. 48 - an exploded perspective view of component elements of the same device; Fig. 49 - the same device in the top view; Fig. 50 - the same device in vertical axial section along line L'-L'; Fig. 51 - the same device in vertical axial section along line M'-M'; Fig. 52 - the same device in transverse section along line N'-N'; Fig. 53 - enlarged detail "O"" of one of six identical diode (LED) modules of the device used in horizontal portion of pipeline, in the perspective view; Fig. 54 - the same diode module in the side view; Figs. 55 and 56 - the same module in both of its front view; Fig. 57 - the same module in axial section along line J'-J'; Fig. 58 - the same module in vertical section along line K'-K'; Fig. 59 - an exploded perspective view of component elements of the same module; Fig. 60 - a transverse section along line P'-P' of the housing of the device placed in cured lining of a vertical tube of an inspection chamber for a horizontal pipeline; Fig. 61 - enlarged detail Z' of one of three identical diode (LED) modules of a vertical pipe of the device in the perspective view; Fig. 62 - the same diode module in the top view; Figs. 63-66 - the same diode module in all of its four side views; Fig. 67 - the same diode module in axial section along line U-U; Fig. 68 - the same diode module in transverse section along line V'-V'; and Fig. 69 - an exploded perspective view of component elements of the same module. Further, Fig. 70 depicts the device according to the first variant of its embodiment shown in Figs. 1-12 placed inside a pipeline with inner resin lining in the course of pipeline renovation, shown in axial sections together with the pattern "WP" produced by its LEDs generating electromagnetic radiation covering the whole of surface of the renovated resin lining, and Fig. 71 depicts the device according to the third variant of its embodiment shown in Figs 25-46 positioned inside the horizontal pipeline equipped with a vertically oriented pipe of an inspection chamber, both pipes being lined in the course of renovation of their linings and shown in vertical axial sections together with patterns "WP" produced by its LEDs generating electromagnetic radiation and covering the whole of surfaces of both of the two renovated resin linings.

The device for curing pipeline inner resin linings according to the first variant of its embodiment shown in Figs. 1-12 comprises a cylindrical housing 1 made of a transparent silicone rubber and a subassembly 2 situated in the housing and composed of ten LED modules 3 connected with each other both mechanically, with the use of the pin-and-seat method by means of cylindrical rubber connectors 4 and 4', and electrically, by means of electric conductor 5 supplying electric current to LEDs 6 of each of the ten LED modules 3, and moreover, one of the faces of the cylindrical housing 1 is covered with a round cover 7 fixed to said face, said round cover being provided with an electric socket 8 to which an electric conductor 5 is connected, and further provided with a pneumatic quick connection 9, whereas the other face of the housing is covered with a rear round cover 10 equipped with a video camera 11, and both ends of the housing are fixed to covers 7 and 10 by means of clamp hoops 12 equipped with screw joints 13 pressing the covers against ends of the housing.

Each of the ten LED modules 3 has an identical monolithic profiled aluminium body 14 composed of a solid 15 having the form of a truncated regular pyramid with regular hexagonal base, with flat side walls 16 of said solid having the form of isosceles trapeziums with an annular prominence 17 situated in their central portions and provided with a semicircular groove 18 on its circumference for a rubber O-ring 19 and a round finned profile 20 protruding from rear surface of the body and functioning as a radiator cooling the LEDs 6, having a cylindrical prominence 21 of the same length in its symmetry axis, whereas the body 14 of the module is provided with two blind mounting holes 22 situated opposite each other in the axis of symmetry of the module, and above said blind holes, the hexagonal body has a straight-through hole 23 for the electric conductor 5. Moreover, each of the trapezium-shaped walls 16 of the body 14 is provided with two threaded fixing holes 24 into which screws 25 are screwed to fix the fitting 26 for LED 6.

Further, the subassembly 2 of ten LED modules 3 comprises sets 27 and 27', each set comprising five LED modules 3 connected with each other with the use of four identical cylindrical rubber connecting pieces 4, faces of which are provided with axially oriented cylindrical bolts 28 with a diameter less than this of the connecting pieces, said bolts being fixed in axial holes 22 of each of these LED modules, whereas both of the two sets 27 and 27' of LED modules are connected with each other by means of another rubber cylindrical connector 4', longer than the rubber cylindrical connectors 4, with front bolts 28 of said another rubber cylindrical connector being fixed in holes 22 provided in both of each opposite pairs of solids 15 of bodies 14 of the LED modules 3 so that the finned profiles (radiators) 20 both of the two sets 27 and 27' of the modules are oriented towards the round covers 7 and 10, respectively, whereas the radiators of the two outermost LED modules 3 adhere to said round covers, which in turn, with the use of screws 29 and 29' screwed into holes 22 provided in the diode modules, are joined with both of the two round covers 7 and 10 of the housing 1.

The device for curing pipeline inner resin linings according to the second variant of its embodiment shown in Figs 13-24 has a structure similar to this of the device according to the first variant of its embodiment shown in Figs. 1-12. The structural difference between the two variants of the device consists only in that in the device according to the second variant of its embodiment, the subassembly 2' is composed of six LED modules 30, also connected with each other mechanically, with the use of the pin-and-seat method by means of rubber cylindrical connectors 4 and 4', and electrically, by means of an electric conductor 5 supplying electric current to LEDs 6 of each of the six LED modules 30. However, in the second variant of embodiment of the device according to the invention, each of the six LED modules 30 has a monolithic aluminium body 31 in the form of two identical truncated regular pyramids 32 with their bases, having the form of regular hexagons, turned towards each other, and with side walls 16 having the form of isosceles trapeziums, whereas the bases of the pyramids are also separated from each other with an annular prominence 17 provided on its circumference and having a semicircular groove 18 to hold an annular rubber O-ring 19, while also in this version, each of the trapezoid walls 16 of the body 31 is provided with two threaded holes 24, into which screws 25 are screwed to fix fittings 26 of twelve LEDs 6.

The device for curing pipeline inner resin linings according to the third variant of its embodiment shown in Figs. 25-46, comprising a rectilinear horizontal segment of a pipeline and a vertically oriented tubular segment placed in the renovated pipeline inspection chamber connected to said horizontal segment, is composed of a horizontal subassembly 33 and a vertical subassembly 34, the latter being connected and perpendicularly oriented relative to the former, whereas the horizontal subassembly 33 has a structure similar to this of the subassembly 2 of the device according to the first variant of its embodiment shown in Figs. 1-12. The structural difference between the two variants of the device consists only in that in the third variant of embodiment of the device, the middle connector 4' appearing in the horizontal subassembly 33 in the first variant, was replaced with a T-connection 35 interconnecting, via adapters 36 and intermediate rubber connecting pieces 37, front faces of both of the two central LED modules 39, and by means of a vertically oriented rubber connecting piece 38, the front face of the lower LED module 39' of the vertical subassembly 34 of the device. The vertical subassembly 34 comprises a monolithic cylindrical housing 40 with a rounded upper end 40', made of a silicone resin and having its diameter and length less the cylindrical housing 1 of the subassembly 33, in which a set of four LED modules 39' is situated vertically having the structure analogous to this of the LED module 3 in the first variant of embodiment but with less overall dimensions adapted to dimensions of the cylindrical housing 40, whereas all the LED modules 39' are interconnected both mechanically, with the use of the pin-and-seat method by means of cylindrical rubber connectors 4, and electrically, with the use of another electric conductor 5' supplying electric current to LEDs 6 of each of the four LED modules 39' connected, by means of electric conductor 5, with electric socket 8 provided with the round cover 7 of cylindrical housing 1 of the horizontal subassembly 33. Moreover, in the third variant of embodiment of the device according to the invention, both the horizontal subassembly 33 and the vertical subassembly 34 are equipped with LED modules 39 and 39' similar to those in which the subassembly 2 of the first variant of embodiment of the device was equipped and which were defined above as the LED modules 3, whereas oblique flat walls 16' of the pyramidal solid 15' of the LED module 39' are provided with one threaded mounting hole 24' each into which screws 25' are screwed to fix elliptical fittings 26' for two LEDs 6'.

Further, the device for curing pipeline inner resin linings according to the fourth variant of its embodiment shown in Figs. 47-69, is also composed of a rectilinear horizontal segment of a pipeline and a vertically oriented tubular segment placed in the renovated pipeline inspection chamber connected to said horizontal segment, and also comprises a horizontal subassembly 33 and a vertical subassembly 34', the latter being connected and perpendicularly oriented relative to the former as in the third variant of its embodiment, whereas the horizontal subassembly 33 has structure similar to this of the subassembly 2' of the device according to the second variant of its embodiment shown in Figs. 13-24, and the vertical subassembly 34' has a structure similar to this of the vertical subassembly 34 according to the third variant of its embodiment shown in Figs. 25-29. The structural difference between the fourth variant of embodiment of the device according to the invention and the second and the third variant of embodiment of the device consist only in that in the fourth variant of embodiment of the device, the cylindrical horizontal housing 1 of the horizontal subassembly 33 contains six LED modules 41 connected with each other, said modules being analogous to those situated in the cylindrical housing 1 of the second variant of embodiment of the device. Each of the LED modules 41 has a monolithic aluminium body 31 in the form of two identical truncated regular pyramids 32 hexagonal bases of which are turned towards each other and side walls have the form of isosceles trapeziums, whereas the vertical subassembly 34' in its cylindrical housing 40 is equipped with only three diode modules 41', while in this embodiment variant, oblique flat walls 16' of three solids 31' of each of the LED modules 41' have one threaded mounting hole 24' each into which a screw 25' is screwed to fix an elliptical fitting 26' for two LEDs 6'. Moreover, in the fourth variant of embodiment of the device according to the invention, the horizontal subassembly 33 is equipped with LED modules 41 with structure analogous to this of the modules in which the subassembly 2' is equipped in the second variant of embodiment of the device referred to above as the LED modules 30.

The metal bodies in all variants of the device according to the invention are favourably made of aluminium.

In another embodiment of the device according to the invention, instead of diode modules equipped with LEDs, vacuum electron tubes emitting UV light were used which also resulted in curing the pipeline inner resin lining.

Moreover, the profiled metal bodies of the diode modules in another embodiment of the device, not shown in drawings, constituted solids the form of truncated cones with LED fittings mounted on their side surfaces thanks to which the LEDs irradiated the renovated pipeline at the desired angle.

It is further understood that the device for curing inner resin linings in case of a two-tube pipeline can be also adapted for operation in a combination of two pipelines joined and oriented with respect to each other at any angle, e.g. 60°.

As it is shown in Figs. 70 and 71, the device for curing pipeline inner resin linings according to the first variant of its embodiment shown in Figs. 1-12 was placed in a rectilinear segment of a pipeline 43 with inner resin lining 44, and the device according to the third variant of its embodiment shown in Figs. 25-46 was placed in a pipeline 43' equipped with a vertical pipe segment 45 of an inspection chamber, whereas both of the two pipe segments was lined with the inner resin lining 44. When electric power was supplied to LEDs 6 of the devices by means of electric conductors 5 or 5 and 5' from electric sockets 8 and the diodes started to generate electromagnetic radiation with the wavelength of 400 nm, it turned out that the pattern "WP" of the radiation covered the whole of the inner surface of the renovated resin lining in both of the two pipelines 43 and 43'.

## Claims

1. A device for curing inner resin linings of single-element and rectilinear-profile pipelines comprising a cylindrical housing made of a transparent plastic, which houses a coaxially situated subassembly composed of detachably interconnected diode modules, whereas the diodes generating electromagnetic UV radiation are mounted on surfaces of the modules, and both end faces of the housing are provided with round covers against which the ends of the housing are pressed with the use of clamp hoops with screw joints, whereas the rear cover is provided with an electric socket to which electric conductors are connected interconnecting the LEDs and a pneumatic connection supplying compressed air to the housing **characterised in that** in its housing (1) made of a silicone rubber transparent for the light emitted by LEDs (6) mounted in the housing of for the UV light, a subassembly (2) equipped with LED modules (3) is placed, profiled metal bodies (14) of which constitute solids (15) in the form of truncated pyramids with polygonal bases or in the form of truncated cones provided with protrusions (20) in the form of fins inscribed in perimeters of the bases, whereas fittings (26) equipped with LEDs (6) are joined detachably to side walls (16) of the bodies; or in said housing (1), a subassembly (2') is placed, LED modules (30) of which have also metal bodies (31) but in the form of two truncated pyramids (32) or truncated cones with their bases turned towards each other, whereas side walls (16) of the bodies (31) are joined detachably with fittings (26) equipped with LEDs (6).

2. The device according to claim 1 **characterised in that** both the metal bodies (14) of LED modules (3) and the metal bodies (31) of LED modules (30) are provided with coaxially drilled mounting holes (22) on their side face walls, and above said holes, they have single straight-through holes (23) for electric conductors (5) connected to an electric socket (8) provided in a round front cover (7), said electric conductors supplying electric current to LEDs (6) of all the LED modules (3 and 30).

3. The device according to claim 1 or 2 **characterised in that** in the threaded mounting holes (22) of LED modules (3) and (30), rubber connecting pieces (4 and 4') are fixed which connect the modules with each other.

4. The device according to any of claims from 1 to 3 **characterised in that** the subassembly (2) of the LED modules (3) comprises two sets (27 and 27') of said modules, each set comprising the same number of the modules, and finned offsets (20) functioning as radiators for each of the sets are oriented towards respective round covers (7 and 10) of the body (1).

5. The device according to claim 1 **characterised in that** the metal bodies (14) are made of aluminium.

6. The device according to claim 1 **characterised in that** bases of the solids (15) are separated from each other with an annular prominence (17) provided with a groove (18) for an O-ring (19).

7. A device for curing inner resin linings in two-element rectilinear-profiled pipelines connected with each other at an angle, of which at least one may have a housing made of a transparent plastic in which there is a coaxially situated subassembly composed of detachably interconnected diode modules, whereas the diodes generating electromagnetic UV radiation are mounted on their surfaces, and both of the two end faces of the housing are provided with round covers against which the ends of the housing are pressed with the use of clamp hoops with screw joints, whereas the rear cover is provided with an electric socket to which electric conductors are connected interconnecting the diode modules and further provided with a pneumatic connection supplying compressed air to the housing **characterised in that** the device comprises a first housing (1) and a second cylindrical housing (40) joined and oriented at appropriate angle to the first housing, both housing having different diameters and lengths, made of a silicone rubber transparent to the light emitted by LEDs (6 and 6') mounted inside or transparent to the UV light, and equipped with, respectively, with a horizontal subassembly (33) and a vertical subassembly (34) connected articulately with each other, both containing LED modules (39 and 39') the metal bodies (14) of which constitute solids (15 and 15') in the form of truncated pyramids with polygonal bases or in the form of truncated cones with their bases provided with protrusions in the form of fins (20 and 20') inscribed in perimeters of the bases, whereas fittings (26 and 26') equipped with LEDs (6 and 6') are joined detachably to side walls (16 and 16') of the bodies; or in the two cylindrical housings (1 and 40) of the device, a horizontal subassembly (33) and a vertical subassembly (34') are placed and connected articulately with each other, LED modules (41 and 41') of which have also metal bodies (31 and 31') but in the form of two truncated pyramids (32) or two truncated cones with their bases turned towards each other, whereas the walls (16 and 16') are connected, also detachably, with fittings (26 and 26') equipped with LEDs (6 and 6').

8. The device according to claim 7 **characterised in that** that walls (16 and 16') of LED modules (39' and 41') of vertical subassemblies (34 are 34') of the device are equipped with two LEDs (6 and 6') each.

9. The device according to any of claims 7 or 8 **characterised in that** that both the metal bodies (14) of LED modules (39 and 39') and the metal bodies (31 and 31') of LED modules (41 and 41') are provided with coaxially drilled mounting holes (22) on their side face walls, and above said holes, they have single straight-through holes (23) for electric conductors (5 and 5') connected to an electric socket (8) provided in a round front cover (7) to supply electric current to LEDs (6 and 6') of all the LED modules.

10. The device according to any of claims 7 or 8 **characterised in that** that in the threaded mounting holes (22) of the LED modules (39 and 41), rubber connecting pieces (4) are fixed which connect the modules with each other.

11. The device according to any of claims from 7 to 10 **characterised in that** the horizontal subassembly (33) of the LED modules (39) constitutes two sets (27 and 27') of such modules, each set having the same number of modules, and finned offsets (20) functioning as radiators for each of the sets are oriented towards the respective round cover (7 and 10) of the body (1), while the finned offsets (20) of LED modules (39') of the vertical subassembly (34) are oriented towards a rounded end (40') of the housing (40).

12. The device according to claim 7 **characterised in that** that the metal bodies (14, 31, and 31') are made of aluminium.

13. The device according to claim 7 **characterised in that** that the bases of the solids (15 and 15') are separated from each other with an annular prominence (17) provided with a groove (18) for an O-ring (19).

14. The device according to claim 7 **characterised in that** the vertical subassembly (34 or 34') is oriented at the right angle or an acute angle or an obtuse angle relative to the horizontal assembly (33).
